# EUROPÄISCHE PATENTSCHRIFT

(11) **EP 2 541 707 B1**
(45) Veröffentlichungstag und Bekanntmachung des Hinweises auf die Patenterteilung: **11.03.2015**
(21) Anmeldenummer: 12167825.4
(22) Anmeldetag: 14.05.2012
(51) Int. Cl.: H02G 3/18

(54) **Schnurauslasstubus für eine Unterflurkassette**
Cord outlet tube for an under-floor cartridge
Tube de sortie de cordon pour une cassette souterraine

(30) Priorität: 01.07.2011 DE 102011078510
(43) Veröffentlichungstag der Anmeldung: 02.01.2013
(73) Patentinhaber: OBO Bettermann GmbH & Co. KG, 58710 Menden (DE)
(72) Erfinder: Ruhr, Siegfried, 51674 Wiehl (DE)
(74) Vertreter: Patentanwälte Ruff, Wilhelm, Beier, Dauster & Partner

(56) Entgegenhaltungen:
- EP-A1- 0 648 000
- EP-A2- 1 667 299
- DE-A1- 4 234 751

## Beschreibung

Die Erfindung betrifft einen Schnurauslasstubus für eine Unterflurkassette für elektrische Installationsgeräte mit einem Tubusring, der relativ zu einem Deckel verschiebbar an diesem anordenbar ist und einem Tubusdeckel.

Aus der europäischen Offenlegungsschrift EP 0 648 000 A1 ist eine Unterflurgerätedose für nass zu reinigende Böden bekannt, die einen Schnurauslasstubus in einem aufklappbaren Deckel aufweist. Der Schnurauslasstubus ist verschiebbar in dem Deckel angeordnet und kann in einer versenkten und einer ausgezogenen Stellung angeordnet und arretiert werden. Der Schnurauslasstubus selbst ist mit einem aufklappbaren Tubusdeckel versehen.

Die Offenlegungsschrift EP 1 667 299 A2 zeigt Tubusdeckel, die mittels eines Bajonettverschlusses an Tubusringen befestigt werden können. Die Tubusdeckel sind dabei in einfacher Weise und ohne Werkzeug am Tubusring befestigbar.

Die Offenlegungschrift DE 42 34 751 A1 zeigt einen Tubusring und einen daran verschiebbar gehaltenen, abnehmbaren Tubusdeckel.

Mit der Erfindung soll ein Schnurauslasstubus für Unterflurkassetten verbessert werden.

Erfindungsgemäß ist hierzu ein Schnurauslasstubus für eine Unterflurkassette für elektrische Installationsgeräte mit einem Tubusring, der relativ zu einem Deckel verschiebbar an diesem anordenbar ist, und einem Tubusdeckel vorgesehen, bei dem der Tubusdeckel mittels wenigstens zwei Rasteinrichtungen am Tubusring befestigbar ist, wobei die Rasteinrichtungen gemeinsam betätigbar und so miteinander gekoppelt sind, dass das Eindrücken einer Rasteinrichtung radial nach innen gleichzeitig die Verlagerung aller übrigen Rasteinrichtungen radial nach innen verursacht.

Durch diese Maßnahmen ist der Tubusdeckel zum einen vollständig abnehmbar am Tubusring angeordnet, so dass im abgenommenen Zustand des Tubusdeckels der volle, freie Querschnitt des Tubusrings zum Durchführen von Steckern, Kabeln und dergleichen genutzt werden kann. Darüber hinaus kann der Tubusdeckel in sehr einfacher Weise abgenommen werden, da die wenigstens zwei Rasteinrichtungen gemeinsam betätigbar und so miteinander gekoppelt sind, dass das Eindrücken einer Rasteinrichtung radial nach innen gleichzeitig die Verlagerung aller übrigen Rasteinrichtungen radial nach innen verursacht.

Der Tubusdeckel kann dadurch einhändig in sehr einfacher Weise abgenommen werden. Zweckmäßigerweise sind die Rasteinrichtungen werkzeuglos betätigbar, so dass ein Benutzer den Tubusdeckel mit einer Hand schnell und problemlos vom Tubusring abnehmen kann. Umgekehrt kann der Tubusdeckel auch wieder werkzeuglos und idealerweise einhändig auf den Tubusring aufgesetzt werden. Unter den Begriff Unterflurkassette fallen im Sinne der vorliegenden Erfindung auch sogenannte Unterflurgerätedosen mit Deckel.

In Weiterbildung der Erfindung sind die Rasteinrichtungen verschiebbar im Tubusdeckel angeordnet und mittels Anlaufschrägen gekoppelt.

Die verschiebbare Anordnung der Rasteinrichtungen im Tubusdeckel hat sich gegenüber anderen, beispielsweise schwenkbaren Anordnungen als vorteilhaft herausgestellt. Die Rasteinrichtungen können durch die verschiebbare Anordnung platzsparend angeordnet werden und dennoch können die wenigstens zwei Rasteinrichtungen problemlos mittels Anlaufschrägen für eine gemeinsame Betätigung angeordnet werden. Der Einsatz von Anlaufschrägen für die Koppelung der Rasteinrichtungen ist besonders einfach und platzsparend. Beispielsweise können die Rasteinrichtungen so ausgebildet sein, dass sie jeweils einteilig ausgebildet sind und unmittelbar aneinander angreifen. Auf diese Weise werden nur sehr wenige separate Bauteile benötigt, so dass ein einfacher, kostengünstiger Aufbau bei zuverlässiger Funktion erzielt werden kann.

In Weiterbildung der Erfindung sind die Rasteinrichtungen in radialer Richtung des Tubusdeckels und parallel zu einer Oberseite des Tubusdeckels verschiebbar an diesem angeordnet.

Auf diese Weise ist eine sehr platzsparende Unterbringung der Rasteinrichtungen, beispielsweise unmittelbar unterhalb der Oberseite des Tubusdeckels, möglich. Die Verschiebbarkeit in radialer Richtung ermöglicht einen sicheren Angriff am Tubusring und dadurch eine stabile Verrastung durch mehrere Rasteinrichtungen. Der Tubusdeckel ist im verrasteten Zustand dadurch sicher verankert und gegen Beschädigungen bei unbeabsichtigter Belastung geschützt.

In Weiterbildung der Erfindung sind vier Rasteinrichtungen mit jeweils einem in radialer Richtung des Tubusdeckels und parallel zu einer Oberseite des Tubusdeckels verschiebbaren Rastarm vorgesehen, wobei zwei benachbarte Rastarme jeweils in einem Winkel von 90° zueinander angeordnet sind.

Durch Vorsehen von vier Rasteinrichtungen kann eine sehr sichere Verrastung und eine gleichmäßige Verteilung der Kräfte auf den Tubusring erzielt werden, wenn der Tubusdeckel beispielsweise versehentlich im verrasteten Zustand belastet wird. Die Anordnung zweier benachbarter Rastarme jeweils in einem Winkel von 90° zueinander ermöglicht deren Koppelung mittels Anlaufschrägen sowohl für eine Bewegung in radialer Richtung nach außen als auch entgegengesetzt.

In Weiterbildung der Erfindung sind die Anlaufschrägen jeweils in einem Winkel von 45° zu einer Verschieberichtung der Rastarme angeordnet.

Auf diese Weise kann eine gute Kraftübertragung erzielt werden und es kann gleichzeitig sichergestellt werden, dass die Anlaufschrägen nicht aneinander verhaken. Auf diese Weise kann eine sehr zuverlässige und wenig verschmutzungsempfindliche Konstruktion bereitgestellt werden.

In Weiterbildung der Erfindung weist jeder Rastarm wenigstens eine erste und eine zweite Anlaufschräge auf, wobei die erste Anlaufschräge in einem Winkel von 45° im Uhrzeigersinn und die zweite Anlaufschräge senkrecht zur ersten Anlaufschräge angeordnet ist.

Auf diese Weise können die Rastarme sowohl für eine Bewegung in radialer Richtung nach außen als auch nach innen gekoppelt werden. Die Anordnung der Anlaufschrägen in einem Winkel von ± 45° erlaubt eine zuverlässige Kopplung, ohne dass das Verklemmen oder Verhaken der Anlaufschrägen aneinander zu befürchten ist. Auch können die Betätigungskräfte bei entsprechender Auslegung der Anlaufschrägen sowie geeigneter Materialwahl so ausgelegt werden, dass eine problemlose Betätigung von Hand und speziell eine einhändige Betätigung möglich ist.

In Weiterbildung der Erfindung ist die erste Anlaufschräge an einem Vorsprung des Rastarms angeordnet, der sich in einem Winkel von 45° zu einer Verschieberichtung des Rastarmes von diesem weg erstreckt. Durch Vorsehen eines solchen Vorsprungs und die Anordnung der ersten Anlaufschräge an diesem Vorsprung lässt sich die gegenseitige Kopplung der Rastarme in einfacher und platzsparender Weise erreichen. Vorteilhafterweise greifen die Rastarme mit ihrem Vorsprung an dem jeweils benachbarten Vorsprung an.

Sind vier Rastarme vorgesehen, so greifen die Rastarme mit ihrem jeweiligen Vorsprung beispielsweise jeweils entgegen dem Uhrzeigersinn an dem nächsten Rastarm an. Auf diese Weise können alle vier Rastarme miteinander gekoppelt werden. Dies sowohl für eine Bewegung in radialer Richtung nach außen als auch nach innen.

In Weiterbildung der Erfindung ist die zweite Anlaufschräge mittels einer nutförmigen Aussparung in dem Rastarm ausgebildet.

Mittels einer nutförmigen Aussparung, in die beispielsweise der Vorsprung an dem benachbarten Rastarm eingreift, lässt sich eine zuverlässige Kraftübertragung bei sicherer Führung und reibungsarmer Ausbildung sicherstellen.

In Weiterbildung der Erfindung sind die wenigstens zwei Rasteinrichtungen identisch ausgebildet. Auf diese Weise können die Rasteinrichtungen beispielsweise aus Zinkdruckguss oder Kunststoffspritzguss in großen Stückzahlen kostengünstig gefertigt werden. Sind beispielsweise vier Rastarme im Tubusdeckel vorgesehen, so können diese vier Rastarme identisch zueinander ausgebildet sein. Der erfindungsgemäße Schnurauslasstubus kann dadurch kostengünstig hergestellt werden.

Weitere Merkmale und Vorteile der Erfindung ergeben sich aus den Ansprüchen und der nachfolgenden Beschreibung einer bevorzugten Ausführungsform der Erfindung im Zusammenhang mit den Zeichnungen. Einzelmerkmale aus den unterschiedlichen Zeichnungen lassen sich dabei in beliebiger Weise miteinander kombinieren, ohne den Rahmen der Erfindung zu überschreiten. In den Zeichnungen zeigen:
- Fig. 1: eine Ansicht auf eine Unterflurkassette mit einem erfindungsgemäßen Schnurauslasstubus von schräg oben,
- Fig. 2: eine Schnittansicht der Unterflurkassette der Fig. 1,
- Fig. 3: eine Ansicht des Schnurauslasstubus der Unterflurkassette der Fig. 1 im vollständig ausgezogenen Zustand,
- Fig. 4: eine Schnittansicht des Schnurauslasstubus der Fig. 3,
- Fig. 5: eine Ansicht des Schnurauslasstubus der Fig. 3 bei abgenommenem Tubusdeckel,
- Fig. 6: eine Ansicht des Schnurauslasstubus der Fig. 3 im eingeschobenen Zustand und abgenommenem, aber noch dargestellten Tubusdeckel,
- Fig. 7: den Tubusdeckel des Schnurauslasstubus der Fig. 3 von schräg oben,
- Fig. 8: den Tubusdeckel der Fig. 7 in einer Seitenansicht,
- Fig. 9: den Tubusdeckel der Fig. 7 von schräg unten,
- Fig. 10: den Tubusdeckel der Fig. 7 von unten,
- Fig. 11: den Tubusdeckel der Fig. 9 im teilweise zerlegten Zustand,
- Fig. 12: den Tubusdeckel der Fig. 10 im teilweise zerlegten Zustand,
- Fig. 13: die Rastarme des Tubusdeckels der Fig. 7 in einer Ansicht von schräg unten,
- Fig. 14: eine vergrößerte Darstellung von zwei Rastarmen aus Fig. 13 von schräg unten,
- Fig. 15: einen der Rastarme aus Fig. 13 von schräg unten und
- Fig. 16: den Rastarm der Fig. 15 von schräg oben.

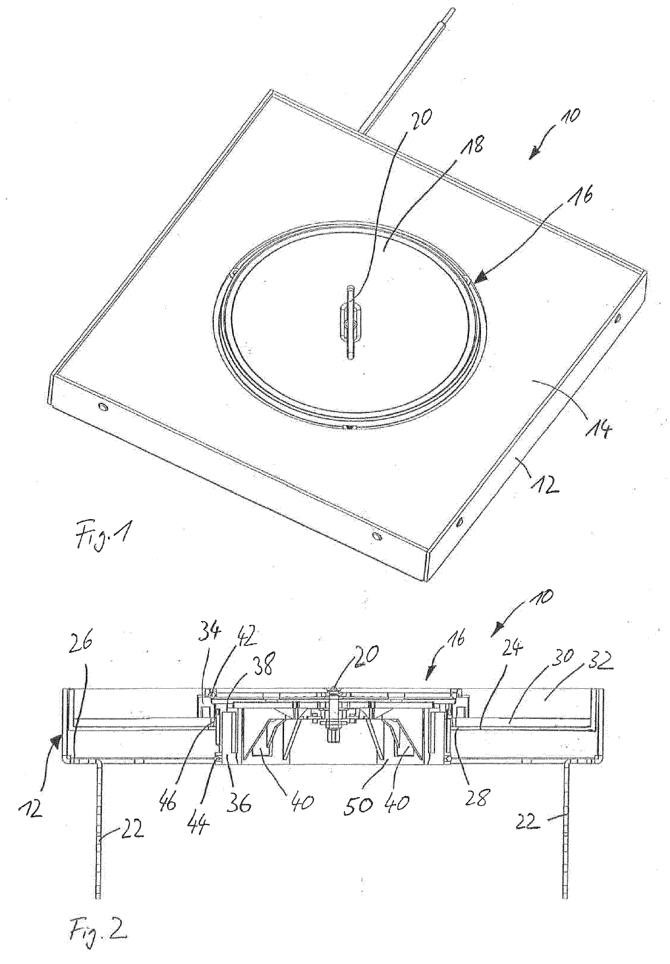

Die Darstellung der Fig. 1 zeigt eine Unterflurkassette 10 von schräg oben. Die Unterflurkassette 10 weist ein Gehäuse 12 auf, von dem in der Ansicht der Fig. 1 lediglich eine äußere Umrahmung erkennbar ist. Weiter weist die Unterflurkassette 10 einen Deckel 14 auf, der abnehmbar auf das Gehäuse 12 aufgelegt ist. In dem Deckel 14 ist mittig ein erfindungsgemäßer Schnurauslasstubus 16 angeordnet. Der Schnurauslasstubus 16 ist in der Darstellung der Fig. 1 im eingeschobenen Zustand dargestellt, in dem eine Oberseite des Tubusdeckels 18 mit der Oberseite eines Bodenbelags in dem, den Schnurauslasstubus 16 umgebenden Bereich des Deckels 14 angeordnet ist. Der Tubusdeckel 18 ist mit einem ausziehbaren U-Bügel 20 versehen. Um den Schnurauslasstubus 16 von der in Fig. 1 dargestellten eingeschobenen Stellung in seine vollständig ausgezogene Stellung zu bringen, kann ein Benutzer zunächst den U-Bügel 20 ergreifen, diesen ein Stück ausziehen und dann an dem U-Bügel 20 den Schnurauslasstubus 16 ausziehen. Durch Drehung des U-Bügels 20 können dann auch die verschiedenen Bauteile des Schnurauslasstubus 16 gegeneinander verrastet werden, wie nachfolgend noch erläutert wird.

In der Darstellung der Fig. 2 ist die Unterflurkassette 10 in einer Schnittansicht dargestellt. Das Gehäuse 12 weist zwei Rastleitern 22 auf, die einander gegenüberliegen und die sich von einer Oberseite des Gehäuses 12 weg nach unten erstrecken. Die Rastleitern 22 sind dafür vorgesehen, sogenannte Gerätebecher einzuhängen, in denen dann Installationsgeräte, beispielsweise Energie- oder Datensteckdosen oder Überspannungsschutzgeräte, angeordnet werden. Alternativ kann in die Rastleitern 22 ein Halterahmen eingesetzt werden, an dem dann wiederum die Installationsgeräte angeordnet werden.

In das Gehäuse 12 ist der Deckel 14 eingesetzt, der eine Deckelschale 24 aufweist, die insbesondere als Blechteil ausgebildet ist und die in ihren Außenabmessungen auf die Innenabmessungen des Gehäuses 12 abgestimmt ist. In der Fig. 2 ist zur Verdeutlichung die Deckelschale 24 mit einer geringeren Höhe als das Gehäuse 12 dargestellt. Üblicherweise liegt der in Fig. 2 unten liegende Boden der Deckelschale 24 auf einem umlaufenden Rand 26 des Gehäuses 12 auf. Die Deckelschale 24 weist eine mittig angeordnete, etwa kreisrunde Ausnehmung 28 auf, in die der Schnurauslasstubus 16 eingesetzt ist. Die Deckelschale 24 ist mit einer Einlegeplatte 30 versehen, die auf die Innenabmessungen der Deckelschale 24 abgestimmt ist und die ebenfalls eine kreisrunde, mittige Ausnehmung aufweist. Die Einlegeplatte 30 dient zur Verstärkung der Deckelschale 24 und auch dazu, die Innenhöhe der Deckelschale 24 exakt auf die Höhe eines einzulegenden Bodenbelags 32 zu verringern. Der Bodenbelag 32 weist ebenfalls eine mittige, kreisrunde Ausnehmung auf, innerhalb der der Schnurauslasstubus 16 angeordnet ist.

Der Schnurauslasstubus 16 selbst weist einen Stützring 34 auf, der fest an der Deckelschale 24 bzw. an der Einlegeplatte 30 befestigt ist. Zwischen Stützring 34 und Deckelschale 24 bzw. Einlegeplatte 30 können erforderlichenfalls noch Distanzringe eingelegt werden, um die Oberseite des Schnurauslasstubus 16 exakt auf die Oberseite des Bodenbelags 32 auszurichten. In dem Stützring 34 ist verschiebbar ein Tubusring 36 angeordnet, der ausgehend von der in Fig. 2 dargestellten Lage relativ zur Deckelschale 24 nach oben hin ausgezogen werden kann. An dem Tubusring 36 ist verschiebbar ein Tubusdeckel 38 angeordnet, der ausgehend von der in Fig. 2 dargestellten Lage relativ zum Tubusring 36 nach oben verschoben werden kann. Der Tubusdeckel 38 weist insgesamt vier radial nach außen bzw. innen verlagerbare Rastvorsprünge 40 auf, die in Fenstern von unbeweglich angeordneten Führungsarmen 50 angeordnet sind. Von den Rastvorsprüngen 40 und Führungsarmen 50 sind in der Darstellung der Fig. 2 lediglich zwei erkennbar. Die Führungsarme 50 sorgen für eine Führung des Tubusdeckels 38 am Tubusring 36 und die Rastvorsprünge 40 verrasten in der vollständig ausgezogenen Stellung des Tubusdeckels 38 den Tubusdeckel 38 am Tubusring 36 in seiner Endstellung.

Zum Ausziehen des Schnurauslasstubus 16 wird der Tubusdeckel 38 an dem Griffbügel 20 ergriffen und in der Darstellung der Fig. 2 nach oben gezogen. Dadurch verschiebt sich der Tubusdeckel 38 relativ zum Tubusring 36 und der Tubusring 36 verschiebt sich relativ zum Stützring 34. Der Schnurauslasstubus 16 wird dadurch nach Art eines Teleskops ausgezogen.

Der Tubusdeckel 38 ist an seinem Außenumfang mit einer umlaufenden Dichtung 42 versehen, die im vollständig eingeschobenen Zustand des Schnurauslasstubus 16 an einer Innenwandung des Stützrings 34 anliegt und dadurch verhindert, dass Wasser und Schmutz zwischen Stützring 34 und Tubusdeckel 38 eindringen können. Die umlaufende Dichtung 42 ist unmittelbar unterhalb einer Oberseite des Tubusdeckels 38 und damit auch unterhalb einer Oberseite des Bodenbelags 32 angeordnet. Die umlaufende Dichtung 42 ist als O-Ring mit kreisförmigem Querschnitt ausgebildet und ist zwischen zwei zueinander passenden kegelförmigen Flächen des Tubusdeckels 38 bzw. des Stützrings 34 angeordnet.

Der Tubusring 36 ist an seinem unteren Ende ebenfalls mit einer umlaufenden Dichtung 44 versehen. Im vollständig ausgezogenen Zustand des Tubusrings 36 liegt die umlaufende Dichtung 44 an einer kegelförmigen Anlagefläche 46 des Stützrings 34 an und verhindert dadurch auch im ausgezogenen Zustand, dass Wasser und Schmutz in den Innenraum der Unterflurkassette 10 eindringen können.

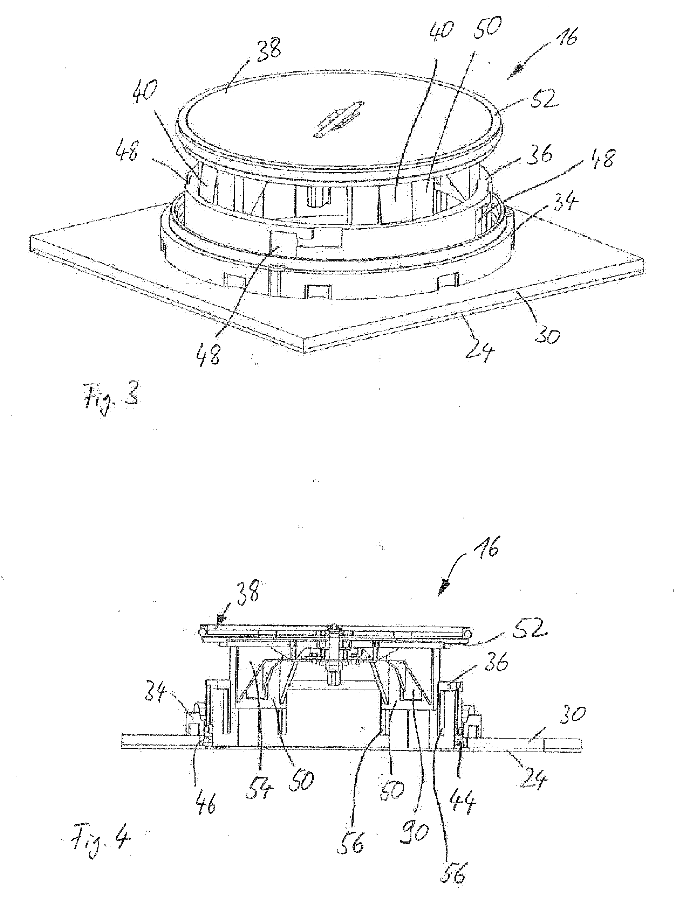

Die Darstellung der Fig. 3 zeigt nur den Schnurauslasstubus 16 mit einem Abschnitt der Deckelschale 24 und der Einlegeplatte 30 im vollständig ausgezogenen Zustand. Der Stützring 34 ist fest mit der Deckelschale 24 verbunden, beispielsweise mittels Schrauben. Der Tubusring 36 ist nun relativ zu der in Fig. 2 dargestellten Stellung zum Stützring 34 verschoben und ragt dadurch über die Oberseite des Stützrings 34 hinaus. In dieser ausgezogenen Stellung wird der Tubusring 36 durch eine Drehung gegen den Uhrzeigersinn in Fig. 3 verrastet. Um eine solche Verrastung zu ermöglichen, weist der Tubusring 36 über seinen Umfang verteilt mehrere vertiefte Führungen 48 auf, die in passende, nach innen vorragende Vorsprünge am Stützring 34 eingreifen. Die Führungen 48 weisen zwei in Umfangsrichtung des Tubusrings 36 verlaufende Abschnitte und einen diese beiden Abschnitte verbindenden vertikalen Abschnitt auf, wobei sich die beiden in Umfangsrichtung verlaufenden Abschnitte in entgegengesetzte Richtungen von dem vertikalen Abschnitt weg erstrecken.

In der Darstellung der Fig. 3 ist auch der Tubusdeckel 38 in seiner vollständig ausgezogenen Stellung dargestellt. In dieser vollständig ausgezogenen Stellung liegen insgesamt vier Rastvorsprünge 40 auf einer Oberseite des Tubusrings 36 auf und halten den Tubusdeckel 38 dadurch in der in Fig. 3 dargestellten vollständig ausgezogenen Stellung. Die Rastvorsprünge 40 ragen jeweils durch Fenster in den Führungsarmen 50 hindurch, die sich ausgehend von einer Deckplatte 52 des Tubusdeckels 38 senkrecht nach unten erstrecken und den Tubusdeckel 38 an dem Tubusring 36 führen.

Die Darstellung der Fig. 4 zeigt den Schnurauslasstubus 16 der Fig. 3 in einer Schnittansicht. Zu erkennen ist, dass in diesem vollständig ausgezogenen Zustand die umlaufende Dichtung 44 am Tubusring 36 an der kegelförmigen Fläche 46 des Stützrings 34 anliegt und dadurch verhindert, dass Schmutz oder Wasser zwischen Stützring 34 und Tubusring 36 in das Innere der Unterflurkassette gelangt. In der Darstellung der Fig. 4 sind zwei der Führungsarme 50 am Tubusdeckel 38 gut zu erkennen, wobei die Führungsarme 50 mittels jeweils zwei plattenförmigen Streben 54 mit der Deckelplatte des Tubusdeckels 38 verbunden sind und dadurch mit der Deckelplatte 52 eine stabile Einheit bilden. Dadurch können die Führungsarme 50 den Tubusdeckel 38 in Längsrichtung zuverlässig am Tubusring 36 führen. In dem jeweiligen Fenster der Führungsarme 50 ist jeweils ein Rastarm 90 des Tubusdeckels 38 zu erkennen. Eine radial außen liegende Fläche der Rastarme 90 ist mit den in Fig. 3 erkennbaren Rastvorsprüngen 40 versehen. Der Tubusring 36 ist mit leistenförmigen, nach innen vorragenden Vorsprüngen 56 versehen, die jeweils seitlich an einem Führungsarm 50 anliegen und dadurch dafür sorgen, dass der Tubusdeckel 38 relativ zum Tubusring 36 nur in axialer Richtung verschoben, nicht aber verdreht werden kann.

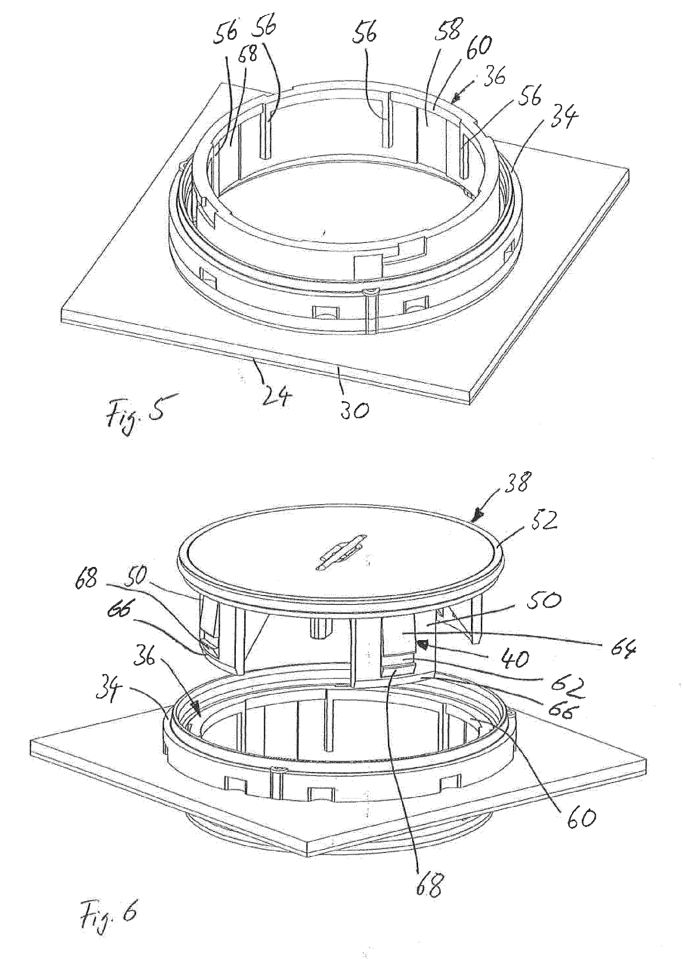

Die Darstellung der Fig. 5 zeigt abschnittsweise die Deckelschale 24 mit der Einlegeplatte 30 und dem an der Deckelschale 24 befestigten Stützring 34 sowie den in der ausgezogenen Stellung der Fig. 3 befindlichen Tubusring 36. Der Übersichtlichkeit halber ist der Tubusdeckel 38 in der Darstellung der Fig. 5 abgenommen und daher nicht gezeigt.

Der Tubusring 36 weist, wie erläutert wurde, insgesamt vier Paare von einander gegenüberliegenden leistenförmigen Vorsprüngen 56 auf, die eine Längsführung für die Führungsarme 50 des Tubusdeckels 38 bereitstellen, siehe Fig. 4. Mittig zwischen zwei leistenförmigen Vorsprüngen 56 ist jeweils eine Nut 58 angeordnet, die auf die Breite der Rastvorsprünge 40 am Tubusdeckel 38 abgestimmt ist, siehe beispielsweise Fig. 6. Zu dem in Fig. 5 oberen Ende hin sind die Nuten 58 jeweils durch den nach innen vorragenden, oberen Rand 60 des Tubusrings 36 abgeschlossen. Die Höhe dieses nach innen vorragenden oberen Randes 60 ist, siehe Fig. 6, auf die Höhe einer in Umfangsrichtung verlaufenden nutförmigen Ausnehmung 62 an den Rastvorsprüngen 40 der Rastarme 90 am Tubusdeckel 38 abgestimmt.

Ausgehend vom vollständig eingeschobenen Zustand gleiten beim Herausziehen des Tubusdeckels 38 aus dem Tubusring 36 die Führungsarme 50 in den durch die beiden gegenüberliegenden leistenförmigen Vorsprünge 56 gebildeten Führungen. Die Rastvorsprünge 40 ragen in die Nut 58 am Tubusring 36 vor und werden dadurch geführt. Die Rastvorsprünge 40 weisen ausgehend von der nutförmigen Ausnehmung 62 nach oben, zur Deckelplatte 52 hin eine erste Anlaufschräge 64 auf und sind relativ zu den Führungsarmen 50 radial nach innen verlagerbar. Beim Hochziehen des Tubusdeckels 38 werden die Rastvorsprünge 40 dadurch radial nach innen gedrückt, bis die nutförmigen Ausnehmungen 62 radial innerhalb des oberen Randes 60 des Tubusrings 36 angeordnet sind und dann durch die Vorspannung der Rastvorsprünge 40 radial nach außen einschnappen. Im eingeschnappten bzw. verrasteten Zustand ist der Rand 60 des Tubusrings 36 dann in den nutförmigen Ausnehmungen 62 an den Rastvorsprüngen 40 aufgenommen. Der Tubusdeckel 38 ist dadurch sowohl gegen ein weiteres Ausziehen nach oben als auch gegen ein Zurückdrücken nach unten gesichert.

Ausgehend von dem in Fig. 6 dargestellten, abgenommenen Zustand des Tubusdeckels 38 wird dieser so auf den Tubusring 36 aufgesetzt, dass sich Abschrägungen 66 am jeweiligen unten und radial außen liegenden Ende der Führungsarme 50 auf der Oberseite der Randabschnitte 60 am Tubusring 36 befinden. Die Abschrägungen 66 erleichtern das Aufsetzen und Zentrieren des Tubusdeckels 38 relativ zum Tubusring 36. Ausgehend von dieser Stellung wird der Tubusdeckel 38 dann relativ zum Tubusring 36 nach unten gedrückt. Dadurch kommen zweite Anlaufschrägen 68 an den Rastvorsprüngen 40 in Anlage an die jeweils innen und oben liegende Kante der Randabschnitte 60 am Tubusring 36. Wird der Tubusdeckel 38 dann weiter nach unten gedrückt, werden auch die Rastvorsprünge 40 durch die Wirkung der zweiten Anlaufschräge 68 radial nach innen verlagert. Sobald die nutförmigen Ausnehmungen 62 radial innerhalb der Randabschnitte 60 liegen, schnappen die Rastvorsprünge 40 dann wieder nach außen, um den Tubusdeckel 38 sicher am Tubusring 36 zu verrasten.

In der verrasteten Stellung ist der Tubusdeckel 38 sowohl in axialer Richtung als auch in Umfangsrichtung relativ zum Tubusring 36 festgelegt. Durch Drehung des Tubusdeckels 38 kann dadurch auch der Tubusring 36 relativ zum Stützring 34 verdreht und in axialer Richtung verschoben werden. Durch Drehung des Tubusdeckels 38 und axiale Verschiebung kann dadurch auch der Tubusring 36 relativ zum Stützring 34 ausgezogen werden und mittels der Kulissenführungen 48 in seine ausgezogene bzw. eingeschobene Stellung verbracht werden.

Zum Abnehmen des Tubusdeckels 38 müssen die Rastvorsprünge 40 radial nach innen gedrückt werden. Dies geschieht durch manuellen Druck radial nach innen auf die Rastvorsprünge 40. Die insgesamt vier Rastvorsprünge 40 sind am radial äußeren Ende von Rastarmen 90 angeordnet, die miteinander gekoppelt sind, so dass das Eindrücken eines bzw. von zwei Rastvorsprüngen 40 radial nach innen gleichzeitig die radiale Verlagerung aller übrigen Rastvorsprünge 40 nach innen verursacht und dadurch den Tubusdeckel 38 freigibt.

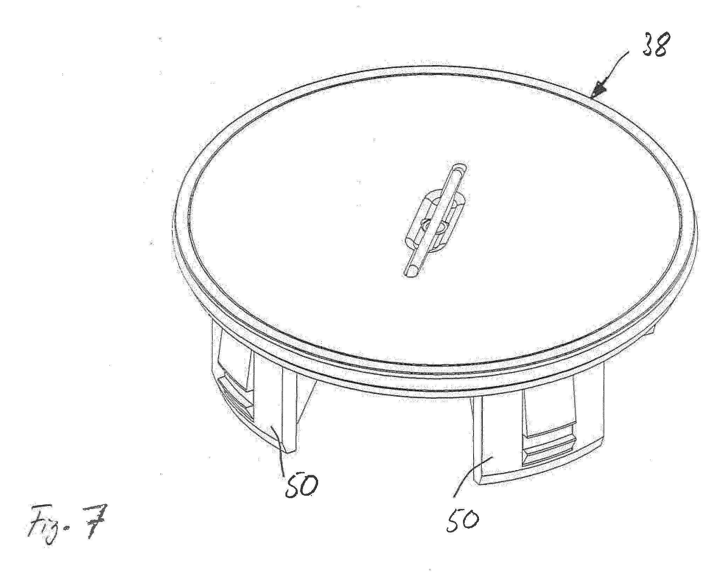

Die Darstellung der Fig. 7 zeigt den Tubusdeckel 38 in einer Ansicht von schräg oben. Zwischen den Führungsarmen 50 ist jeweils ein Zwischenraum vorhanden, der zum Durchführen von Kabeln genutzt werden kann, siehe auch Fig. 3. Kabel können aus der erfindungsgemäßen Unterflurkassette daher in unterschiedlichsten Richtungen ausgeführt werden und beispielsweise können auch gleichzeitig Kabel in unterschiedliche Richtungen ausgeführt werden, indem sie zwischen unterschiedliche Führungsarme 50 gelegt werden.

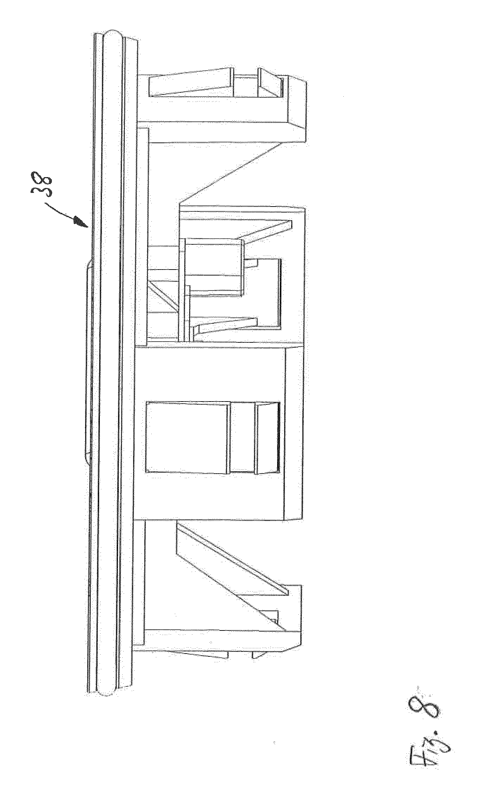

Die Darstellung der Fig. 8 zeigt den Tubusdeckel 38 in einer Seitenansicht.

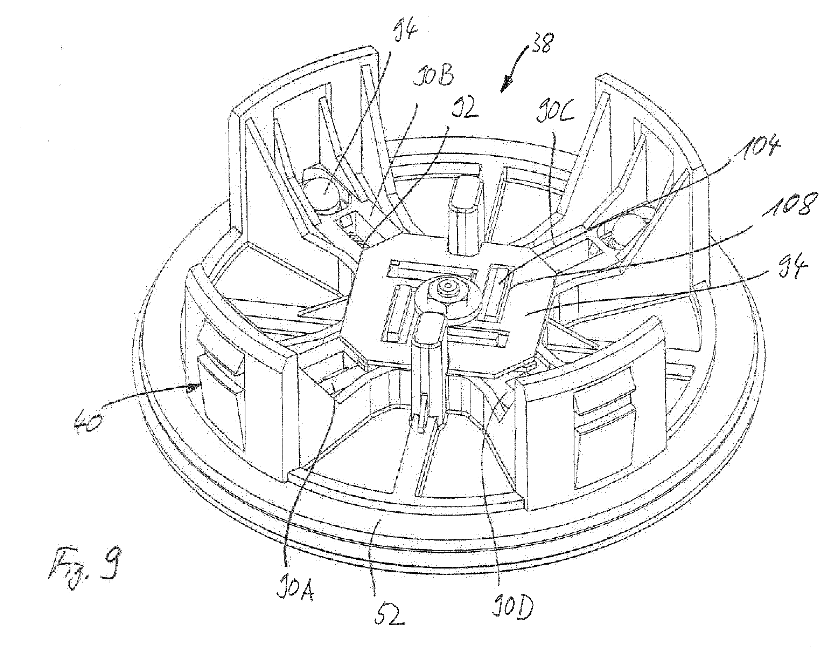

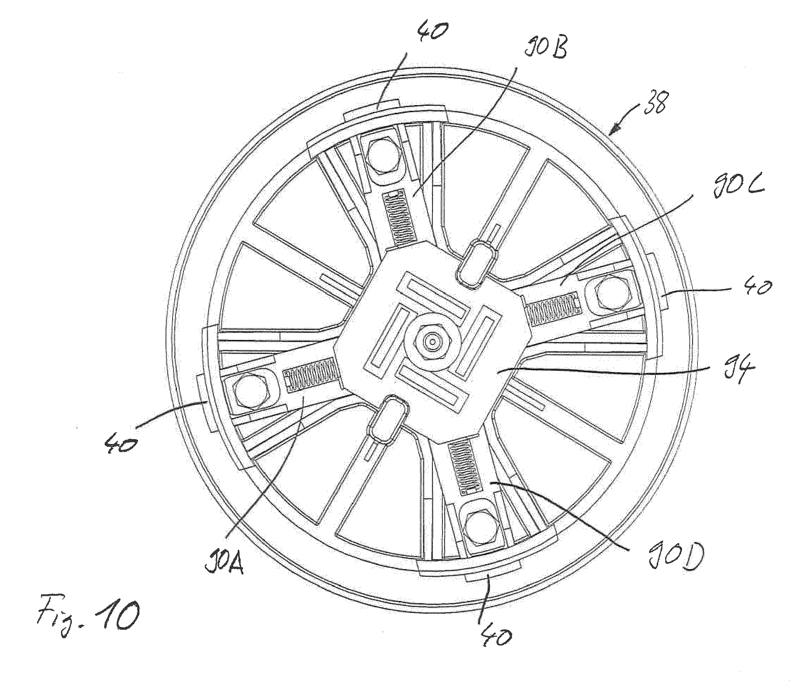

Die Darstellung der Fig. 9 zeigt den Tubusdeckel 38 in einer Ansicht von schräg unten und die Darstellung der Fig. 10 zeigt den Tubusdeckel 38 direkt von unten.

In den Fig. 9 und 10 sind jeweils die Rastvorsprünge 40 zu erkennen, die an einem jeweiligen, radial außen liegenden Ende von Rastarmen 90A, 90B, 90C, 90D angeordnet sind. Die Rastarme 90 sind jeweils mittels Druckfedern 92 radial nach außen vorgespannt, also in ihre Raststellung, und jeweils mittels Führungsbolzen 94 an der Deckelplatte 52 des Tubusdeckels 38 linear verschiebbar angeordnet. Die Führungsbolzen 94 erstrecken sich dabei durch Langlöcher in den Rastarmen 90 hindurch. Die Führungsbolzen können als Gewindebolzen ausgebildet sein, auf die dann Hutmuttern aufgeschraubt sind. Die Hutmuttern sorgen dann für eine unverlierbare Befestigung der Rastarme 90 an der Deckelplatte 52 des Tubusdeckels 38. Durch eine Verschiebung der Rastarme 90 radial nach innen bzw. nach außen können die Rastvorsprünge 40, wie erläutert wurde, an den oberen Randabschnitten 60 des Tubusrings 36 verrastet und entrastet werden.

Die Rastarme 90 sind über in Fig. 9 nicht sichtbare Anlaufschrägen miteinander gekoppelt, so dass das Eindrücken eines Rastvorsprungs 40 bzw. eines Rastarms 90A radial nach innen gleichzeitig die Bewegung der übrigen Rastarme 90B, 90C, 90D radial nach innen verursacht. Es ist dabei unerheblich, welcher der Rastarme 90A, 90B, 90C, 90D radial nach innen gedrückt wird, da alle Rastarme 90 miteinander gekoppelt sind. Bewegt sich einer der Rastarme 90 nach außen oder innen, so bewirkt die Kopplung, dass sich gleichzeitig alle anderen Rastarme ebenfalls radial nach innen bzw. außen bewegen. Die Anlaufschrägen der Rastarme 90 sind in der Darstellung der Fig. 9 nicht zu erkennen, da sie unterhalb einer Abdeckplatte 94 liegen, die von unten her an die Deckelplatte 52 des Tubusdeckels 38 angesetzt und mittels einer Beilagscheibe und einer Mutter an der Deckelplatte 52 gesichert ist.

Die Abdeckplatte 94 ist mit vier rechteckförmigen Ausnehmungen 108 versehen, in denen jeweils eine Führungsleiste 104 eines der Rastarme 90 angeordnet ist. Die Ausnehmungen 108 der Abdeckplatte 94 sind aber dabei so groß, dass die Führungsleisten 104 nicht an den Rand dieser Ausnehmungen 108 anstoßen. Die Führungsleisten 104 dienen zusammen mit der Abdeckplatte 94 daher lediglich dazu, die Rastarme 90 unverlierbar am Tubusdeckel 38 zu halten. Gegebenenfalls können die Ausnehmungen 108 in der Abdeckplatte 94 so bemessen werden, dass die Führungsleisten 104 in den Extremstellungen der Rastarme 90 an den Rand der Ausnehmungen 108 anstoßen und dadurch die Extremstellungen der Rastarme 90 definiert werden.

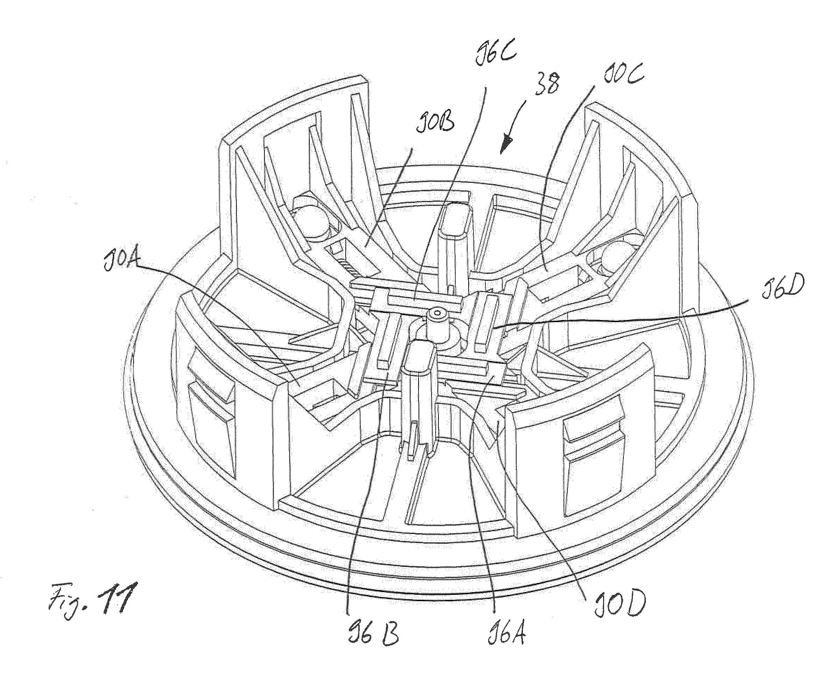

In der Darstellung der Fig. 11 ist der Tubusdeckel 38 in einer Ansicht von schräg unten bei abgenommener Abdeckplatte 94 dargestellt. Zu erkennen ist nun, dass jeder der Rastarme 90A, 90B, 90C, 90D einen in einem Winkel von 45° im Uhrzeigersinn zu einer Verschieberichtung der Rastarme 90 ausgerichteten Vorsprung 96a, 96b, 96c, 96d aufweist. An der Oberseite dieser schräg abragenden Vorsprünge 96 sind die Führungsleisten 104 angeordnet. Die Vorsprünge 96 greifen jeweils in den entgegen dem Uhrzeigersinn benachbarten Rastarme 90 ein, der hierfür mit einer passenden, ebenfalls schräg zur Verschieberichtung angeordneten Führung versehen ist. So greift der Vorsprung 96a des Rastarmes 90a in die Führung am Rastarm 90D ein. Der Vorsprung 96D des Rastarmes 90D greift in die passende Führung am Rastarm 90C ein. Der Vorsprung 96C des Rastarmes 90C greift in die Führung am Rastarm 90B ein und der Vorsprung 96B des Rastarmes 90B greift in die Führung am Rastarm 90A ein. Alle vier Rastarme 90 sind somit miteinander gekoppelt und die Bewegung eines einzigen der Rastarme 90 radial nach innen oder außen führt zu einer gleichartigen Bewegung der übrigen Rastarme 90. Die Koppelung der Rastarme 90 erfolgt dabei über Anlaufschrägen an den jeweiligen Vorsprüngen 96 bzw. den passenden Gegenstücken in den Führungen an den Rastarmen 90.

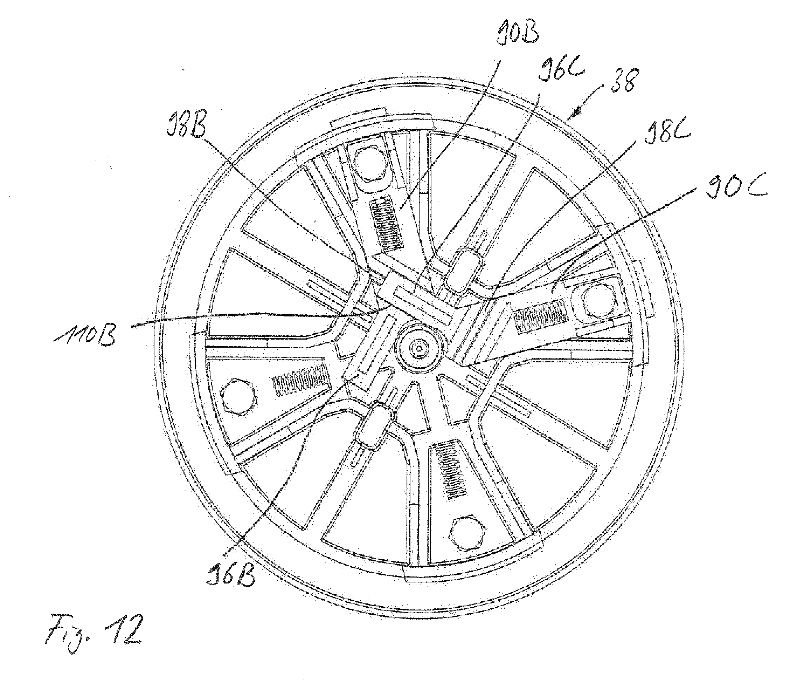

Die Darstellung der Fig. 12 zeigt den Tubusdeckel 38 von unten, wobei die Abdeckplatte 94 und die Rastarme 90A und 90D abgenommen sind. Zu erkennen ist nun, dass der Vorsprung 96C des Rastarmes 90C in einer Führung 98B des Rastarmes 90B verschiebbar aufgenommen ist. Der Vorsprung 96C kann sich dadurch lediglich parallel und innerhalb der Führung 98B bewegen. Eine Bewegung des Rastarmes 90C radial nach innen führt dadurch über die Wirkung der Führung 98B als Anlaufschräge für den Führungsvorsprung 96C auch zu einer Bewegung des Rastarmes 90B radial nach innen. Speziell bewegt sich der Vorsprung 96C in der Darstellung der Fig. 12 radial nach innen, also nach links unten. Der Vorsprung 96C drückt dadurch auf die Anlaufschräge 110B des Rastarmes 90B, die durch eine radial innen liegende schräge Wand der Führung 98B gebildet ist. Diese Bewegung des Vorsprungs 96C radial nach innen führt dann zwangsläufig zu einer Bewegung des Rastarmes 90B radial nach innen. In der Folge bewegt sich auch der Vorsprung 96B des Rastarmes 90B radial nach innen, in der Darstellung der Fig. 12 also nach unten rechts. Dies führt dann wiederum dazu, dass der in Fig. 12 nicht dargestellte Rastarm 90A ebenfalls radial nach innen bewegt wird. Wie bereits erläutert wurde, sind dadurch alle Rastarme 90 bewegungsmäßig miteinander gekoppelt.

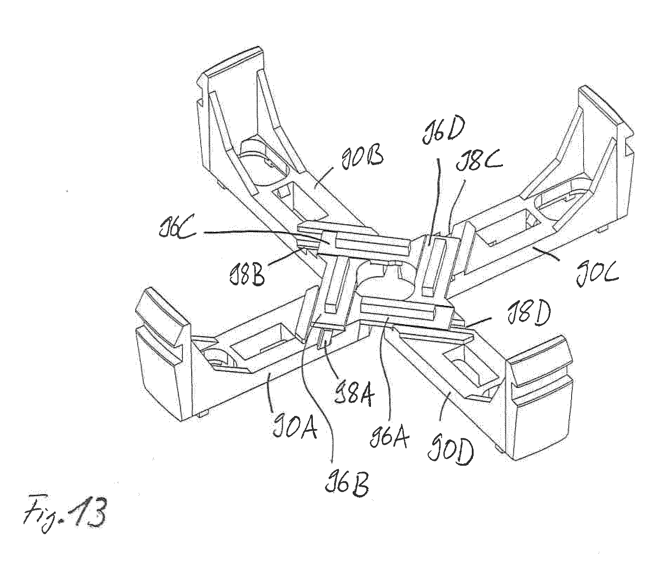

Die Darstellung der Fig. 13 zeigt lediglich die vier Rastarme 90A, 90B, 90C, 90D in ihrer miteinander gekoppelten Stellung, die der Einbaulage im Tubusdeckel 38 gemäß der Darstellung der Fig. 11 entspricht.

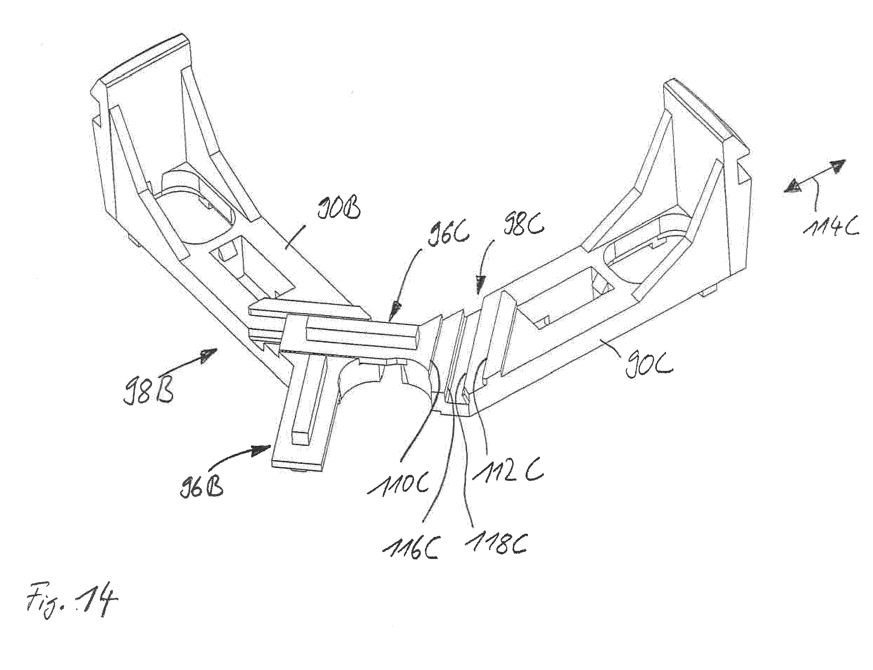

Die Darstellung der Fig. 14 zeigt lediglich die beiden Rastarme 90B und 90C. Zu erkennen sind die jeweiligen Vorsprünge 96C bzw. 96B, die jeweils in einem Winkel von 45° abragen. Ebenfalls zu erkennen sind die jeweiligen Führungen 98C bzw. 98B, die jeweils mittels zweier Nuten gebildet sind, wobei die zweite Nut vom Grund der ersten Grund ausgeht. Am Beispiel der Führung 98C ist die erste Nut durch zwei Anlaufschrägen 110C und 112C gebildet, die zueinander parallel und senkrecht zur Erstreckungsrichtung des Vorsprungs 96C angeordnet sind. Die Anlaufschrägen 110C und 112C liegen damit in einem Winkel von 45° entgegen dem Uhrzeigersinn zu einer Verschieberichtung des Rastarmes 90C, wobei diese Verschieberichtung durch einen Doppelpfeil 114C angedeutet ist. Die beiden Anlaufschrägen 110C, 112C nehmen zwischen sich den Vorsprung 96D des Rastarmes 90D auf, siehe Fig. 13. Bei einer Bewegung des Rastarmes 90D radial nach innen, siehe Fig. 13, sorgt die Anlaufschräge 110C dafür, dass sich auch der Rastarm 90C radial nach innen bewegt. Bei einer Bewegung des Rastarmes 90D radial nach außen, siehe Fig. 13, sorgt die Anlaufschräge 112C dafür, dass sich auch der Rastarme 90C radial nach außen bewegt.

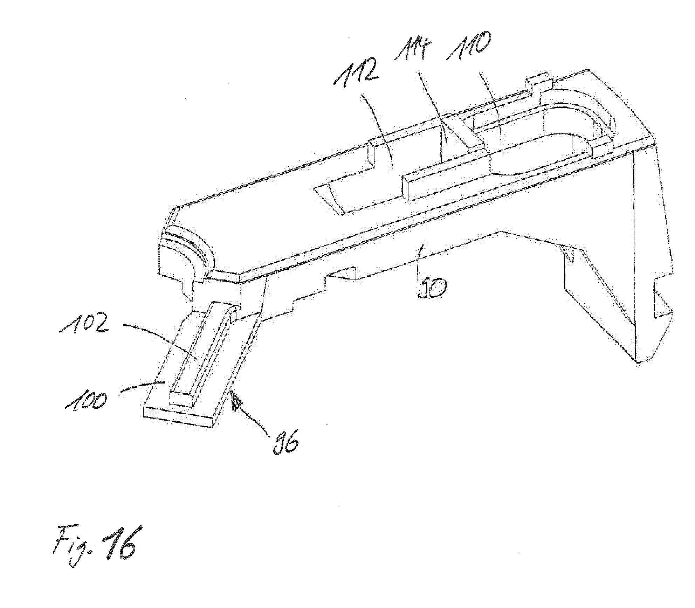

Vom Grund der durch die beiden Anlaufschrägen 110C, 112C definierten Nut geht eine zweite Nut aus, die durch zwei parallele Seitenflächen definiert ist, wobei diese Seitenflächen eine erste Anlaufschräge 116C und eine zweite Anlaufschräge 118C definieren. In die durch die beiden Anlaufschrägen 116C, 118C definierte Nut greift eine Führungsleiste 102 auf der Unterseite des Vorsprungs 96 der Rastarme 90 ein, siehe Fig. 16. In die Nut zwischen den Anlaufschrägen 116C, 118C würde somit eine Führungsleiste 102D auf der Unterseite des Vorsprungs 96D des Rastarmes 90D eingreifen, siehe Fig. 13. Die Wirkung der beiden Anlaufschrägen 116C, 118C und der Führungsleiste 102D ist dabei gleich wie bereits anhand der beiden Anlaufschrägen 110C und 112C erläutert wurde.

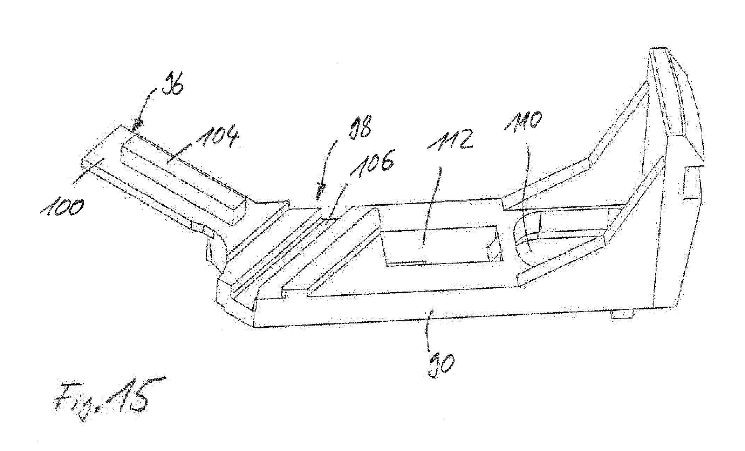

Alle Rastarme 90A, 90B, 90C, 90D sind identisch zueinander ausgebildet. In den Darstellungen der Fig. 15 und 16, die jeweils lediglich einen der Rastarme 90 zeigen, wurden die Buchstabenbezeichnungen daher weggelassen.

Neben der bereits erläuterten Ausbildung der Vorsprünge 96 an den Rastarmen 90 und der Führungsleisten 102, 104 an der Oberseite bzw. Unterseite der Vorsprünge 100 lässt speziell Fig. 15 noch einmal die Ausbildung der Führung 98 mit der Führungsnut 106 am Rastarm 90 erkennen. Weiter ist in den Darstellungen der Fig. 15 und 16 das Langloch 110 zu erkennen, über das, siehe auch Fig. 9, der jeweilige Rastarm 90 mittels eines Führungsbolzens 94 in radialer Richtung verschiebbar an der Deckelplatte 52 des Tubusdeckels 38 gehalten ist. Weiter sind in Fig. 15 und Fig. 16 Aufnahmen 112 für die Druckfedern 92, siehe Fig. 9, zu erkennen. Diese Druckfedern liegen mit ihrem radial innen liegenden Ende an einem Anschlag an der Deckelplatte 52 des Tubusdeckels 38 an und drücken mit ihrem radial außen liegenden Ende gegen eine Anschlagplatte 114 in der Ausnehmungen 112 und spannen dadurch die Rastarme 90 in ihre radial außen liegende Raststellung vor.

Die Rastarme 90 können beispielsweise als Kunststoffspritzgussteil oder Zinkdruckgussteil ausgebildet sein.

## Patentansprüche

1. Schnurauslasstubus für eine Unterflurkassette (10) für elektrische Installationsgeräte mit einem Tubusring (36), der relativ zu einem Deckel (14) verschiebbar an diesem anordenbar ist, und einem Tubusdeckel (38), wobei der Tubusdeckel (38) mittels wenigstens zwei Rasteinrichtungen (40) am Tubusring (36) befestigbar ist, **dadurch gekennzeichnet, dass** die Rasteinrichtungen (40) gemeinsam betätigbar und so miteinander gekoppelt sind, dass das Eindrücken einer Rasteinrichtung (40) radial nach innen gleichzeitig die Verlagerung aller übrigen Rasteinrichtungen (40) radial nach innen verursacht.

2. Schnurauslasstubus nach Anspruch 1, **dadurch gekennzeichnet, dass** die Rasteinrichtungen (40) verschiebbar im Tubusdeckel (38) angeordnet und mittels Anlaufschrägen gekoppelt sind.

3. Schnurauslasstubus nach einem der vorstehenden Ansprüche, **dadurch gekennzeichnet, dass** die Rasteinrichtungen (40) in radialer Richtung des Tubusdeckels (38) und parallel zu einer Oberseite des Tubusdeckels (38) verschiebbar an diesem angeordnet sind.

4. Schnurauslasstubus nach Anspruch 3, **dadurch gekennzeichnet, dass** vier Rasteinrichtungen (40) mit jeweils einem in radialer Richtung des Tubusdeckels (38) und parallel zu einer Oberseite des Tubusdeckels (38) verschiebbaren Rastarm (90A, 90B, 90C, 90D) vorgesehen sind, wobei zwei benachbarte Rastarme (90A, 90B, 90C, 90D) jeweils in einem Winkel von 90 Grad zueinander angeordnet sind.

5. Schnurauslasstubus nach einem der Ansprüche 2 bis 4, **dadurch gekennzeichnet, dass** die Anlaufschrägen (110, 112, 116, 118) jeweils in einem Winkel von 45 Grad zu einer Verschieberichtung der Rastarme (90) angeordnet sind.

6. Schnurauslasstubus nach Anspruch 5, **dadurch gekennzeichnet, dass** jeder Rastarm (90) wenigstens eine erste und eine zweite Anlaufschräge aufweist, wobei die erste Anlaufschräge in einem Winkel von 45 Grad im Uhrzeigersinn und die zweite Anlaufschräge senkrecht zur ersten Anlaufschräge angeordnet ist.

7. Schnurauslasstubus nach Anspruch 5 oder 6, **dadurch gekennzeichnet, dass** die erste Anlaufschräge an einem Vorsprung (96) des Rastarms (90) angeordnet ist, der sich in einem Winkel von 45 Grad zu einer Verschieberichtung des Rastarmes (90) von diesem weg erstreckt.

8. Schnurauslasstubus nach Anspruch 7, **dadurch gekennzeichnet, dass** die Rastarme (90) mit ihrem Vorsprung an dem jeweils benachbarten Rastarm (90) angreifen.

9. Schnurauslasstubus nach einem der Ansprüche 6 bis 8, **dadurch gekennzeichnet, dass** die zweite Anlaufschräge mittels einer nutförmigen Aussparung in dem Rastarm (90) ausgebildet ist.

10. Schnurauslasstubus nach einem der vorstehenden Ansprüche, **dadurch gekennzeichnet, dass** die wenigstens zwei Rasteinrichtungen (40) identisch ausgebildet sind.

## Claims

1. Cord outlet tube for an under-floor cartridge (10) for electric installation devices comprising a tube ring (36) which is arrangeable on a cover (14) and displaceable relative thereto, and a tube cover (38), wherein the tube cover (38) is attachable to the tube ring (36) by means of at least two latching devices (40), **characterized in that** the latching devices (40) are operable in common and coupled to each other such that pushing in of one latching device (40) radially inwards simultaneously causes displacement of all other latching devices (40) radially inwards.

2. Cord outlet tube according to claim 1, **characterized in that** the latching devices (40) are arranged displaceably in the tube cover (38) and are coupled by means of leading slants.

3. Cord outlet tube according to any one of the preceding claims, **characterized in that** the latching devices (40) are arranged on the tube cover (38) to be displaceable in the radial direction of the tube cover (38) and parallel to an upper surface thereof.

4. Cord outlet tube according to claim 3, **characterized in that** four latching devices (40) are provided, each with a latching arm (90A, 90B, 90C, 90D) that is displaceable in the radial direction of the tube cover (38) and parallel to an upper surface of the tube cover (38), wherein two adjacent latching arms (90A, 90B, 90C, 90D) are in each case arranged at an angle of 90 degrees one to the other.

5. Cord outlet tube according to any one of the claims 2 to 4, **characterized in that** the leading slants (110, 112, 116, 118) are each arranged at an angle of 45 degrees to a displacement direction of the latching arms (90).

6. Cord outlet tube according to claim 5, **characterized in that** each latching arm (90) has at least one first and one second leading slant, wherein the first leading slant is arranged at an angle of 45 degrees clockwise and the second leading slant is arranged perpendicular to the first leading slant.

7. Cord outlet tube according to claim 5 or 6, **characterized in that** the first leading slant is arranged on a projection (96) of the latching arm (90) which extends at an angle of 45 degrees to a displacement direction of the latching arm (90) away therefrom.

8. Cord outlet tube according to claim 7, **characterized in that** the latching arms (90) engage on the respective adjacent latching arm (90) by means of their projection.

9. Cord outlet tube according to any one of the claims 6 to 8, **characterized in that** the second leading slant is constituted by a groove-type recess in the latching arm (90).

10. Cord outlet tube according to any one of the preceding claims, **characterized in that** the at least two latching devices (40) are of identical design.

## Revendications

1. Tube de sortie de cordon pour une cassette souterraine (10) pour des appareils d'installation électriques comprenant une bague de tube (36) qui peut être disposée sur un couvercle (14) de manière déplaçable par rapport à celui-ci et un couvercle de tube (38), le couvercle de tube (38) pouvant être fixé à la bague de tube (36) au moyen d'au moins deux dispositifs d'encliquetage (40), **caractérisé en ce que** les dispositifs d'encliquetage (40) peuvent être actionnés conjointement et sont accouplés l'un à l'autre de telle sorte que l'enfoncement d'un dispositif d'encliquetage (40) radialement vers l'intérieur provoque en même temps le déplacement de tous les dispositifs d'encliquetage (40) restants radialement vers l'intérieur.

2. Tube de sortie de cordon selon la revendication 1, **caractérisé en ce que** les dispositifs d'encliquetage (40) sont disposés de manière déplaçable dans le couvercle de tube (38) et sont accouplés au moyen de biseaux d'introduction.

3. Tube de sortie de cordon selon l'une quelconque des revendications précédentes, **caractérisé en ce que** les dispositifs d'encliquetage (40) sont disposés sur le couvercle de tube de manière déplaçable dans la direction radiale du couvercle de tube (38) et parallèlement à un côté supérieur du couvercle de tube (38).

4. Tube de sortie de cordon selon la revendication 3, **caractérisé en ce que** quatre dispositifs d'encliquetage (40) comprenant respectivement un bras d'encliquetage (90A, 90B, 90C, 90D) déplaçable dans la direction radiale du couvercle de tube (38) et parallèlement à un côté supérieur du couvercle de tube (38) sont prévus, deux bras d'encliquetage adjacents (90A, 90B, 90C, 90D) étant disposés respectivement suivant un angle de 90 degrés l'un par rapport à l'autre.

5. Tube de sortie de cordon selon l'une quelconque des revendications 2 à 4, **caractérisé en ce que** les biseaux d'introduction (110, 112, 116, 118) sont respectivement disposés suivant un angle de 45 degrés par rapport à une direction de déplacement des bras d'encliquetage (90).

6. Tube de sortie de cordons selon la revendication 5, **caractérisé en ce que** chaque bras d'encliquetage (90) comprend au moins un premier et un deuxième biseau d'introduction, le premier biseau d'introduction étant disposé suivant un angle de 45 degrés dans le sens des aiguilles d'une montre et le deuxième biseau d'introduction étant disposé perpendiculairement au premier biseau d'introduction.

7. Tube de sortie de cordon selon la revendication 5 ou 6, **caractérisé en ce que** le premier biseau d'introduction est disposé sur une saillie (96) du bras d'encliquetage (90) qui s'étend à l'écart du bras d'encliquetage suivant un angle de 45 degrés par rapport à une direction de déplacement du bras d'encliquetage (90).

8. Tube de sortie de cordon selon la revendication 7, **caractérisé en ce que** les bras d'encliquetage (90) viennent en prise, par leur saillie, avec le bras d'encliquetage adjacent (90) respectif.

9. Tube de sortie de cordon selon l'une quelconque des revendications 6 à 8, **caractérisé en ce que** le deuxième biseau d'introduction est réalisé au moyen d'un évidement en forme de rainure dans le bras d'encliquetage (90).

10. Tube de sortie de cordon selon l'une quelconque des revendications précédentes, **caractérisé en ce que** les au moins deux dispositifs d'encliquetage (40) sont réalisés de manière identique.
